# EUROPÄISCHE PATENTSCHRIFT

(11) **EP 2 097 773 B1**
(45) Veröffentlichungstag und Bekanntmachung des Hinweises auf die Patenterteilung: **21.09.2011**
(21) Anmeldenummer: 07818871.1
(22) Anmeldetag: 10.10.2007
(51) Int. Cl.: G01V 1/22

(54) **VERFAHREN UND VORRICHTUNG ZUM ZEITSERIELLEN ÜBERTRAGEN VON EMPFANGSSIGNALEN ELEKTROAKUSTISCHER WANDLER**
METHOD AND DEVICE FOR THE TIME-SERIAL TRANSMISSION OF RECEPTION SIGNALS OF ELECTROACOUSTIC TRANSDUCERS
PROCÉDÉ ET DISPOSITIF DE TRANSMISSION EN SÉRIE DE SIGNAUX DE RÉCEPTION DE CONVERTISSEURS ÉLECTROACOUSTIQUES

(30) Priorität: 30.10.2006 DE 102006051065
(43) Veröffentlichungstag der Anmeldung: 09.09.2009
(73) Patentinhaber: ATLAS Elektronik GmbH, 28309 Bremen (DE)
(72) Erfinder: HOFFMANN, Peter, 28832 Achim-Baden (DE); MÖLCK, Kersten, 28832 Achim (DE); SCHMIDT, Eberhard, 28207 Bremen (DE)
(74) Vertreter: Wasiljeff, Johannes M.B.
(86) Internationale Anmeldenummer: PCT/EP2007/008798
(87) Internationale Veröffentlichungsnummer: WO 2008/052641

(56) Entgegenhaltungen:
- EP-B- 0 689 188
- DE-A1- 3 151 028
- DE-A1- 19 705 365
- GB-A- 2 148 501
- US-A1- 2004 105 341

## Beschreibung

Die Erfindung betrifft ein Verfahren und eine Vorrichtung zum zeitseriellen Übertragen von Empfangssignalen elektroakustischer Wandler nach dem Oberbegriff des Anspruchs 1.

Eine bekannte Schaltanordnung, auch Elektronikmodul genannt, zum zeitseriellen Übertragen von Empfangssignalen auf eine Datenleitung oder einen Bus (EP 0 689 188 B1) ist jeweils einen Wandlerort einer aus einer Vielzahl von elektroakustischen Wandlern bestehenden, räumlich ausgedehnten Empfangsanordnung zugewiesen und dort mit dem Wandler und einer über alle Wandlerorte geführten Synchronisierleitung verbunden. Die auf der Synchronisierleitung übertragenen Synchronisierimpulse werden von einem Master-Clock-Generator erzeugt. Die Frequenz des Master-Clock-Generators wird durch das Abtasttheorem für die Empfangssignale im höchsten Empfangsfrequenzbereich, die Vielzahl der Wandlerorte und eine vorgegebene Bitlänge für die Digitalisierung des Empfangssignals am Ausgang des Wandlers bestimmt. Ein Taktgenerator der Schaltanordnung verdoppelt die Frequenz des Master-Clock-Generators und liefert Taktimpulse für die Digitalisierung und die Übertragung der digitalisierten Empfangssignale. Mittels eines Zählers wird aus den Taktimpulsen des Taktgenerators im Intervall zwischen zwei aufeinanderfolgenden Synchronisierimpulsen ein Raster mit Rasterimpulsen erzeugt und mit einem bestimmten Rasterimpuls ein Tor geöffnet und über das geöffnete Tor das in einem Schieberegister der Schaltanordnung abgespeicherte digitalisierte Empfangssignal auf die Datenleitung übertragen. Da innerhalb des Rasters mit jedem Rasterimpuls immer an einem der Wandlerorte ein digitalisiertes Signal als Datenpaket bestimmter Bitlänge auf die Datenleitung aufgeschaltet wird, muss das Raster entsprechend ausgelegt werden, damit sich die Datenpakete nicht überschneiden. Da sich aufgrund von Toleranzen in den Bauteilen der einzelnen Schaltanordnungen an den Wandlerorten, z.B. in der Durchlaufzeit der Bauteile, immer Verschiebungen der tatsächlichen Aufschaltung des jeweiligen Datenpakets gegenüber dem Rasterimpuls, ergeben, müssen für eine einwandfreie Signalübertragung ausreichend große Zeitlücken zwischen den aufeinanderfolgenden Datenpaketen vorgehalten werden. Damit sind der Größe der Taktfrequenz des Rasters, im folgenden Rasterfrequenz genannt, und der damit auf der Datenleitung übertragbaren Datenrate Grenzen gesetzt. Um große Datenmengen zu übertragen, greift man auf mehrere parallele Datenleitungen zu. Jede Datenleitung übernimmt den Datentransfer von einem Teil der Wandlerorte zur Empfangsanlage.

Der Erfindung liegt die Aufgabe zugrunde, ein Verfahren und eine Vorrichtung der eingangs genannten Art so zu verbessern, dass eine Datenübertragung mit höherer Rasterfrequenz und damit eine bessere Ausnutzung der Datenleitung erzielt wird.

Die Aufgabe ist erfindungsgemäß durch die Merkmale des Anspruchs 1 bzw. des Anspruchs 6 gelöst.

Das erfindungsgemäße Verfahren und die erfindungsgemäße Vorrichtung haben den Vorteil, dass durch den Ausgleich der den Elektronikmodulen immanenten sog. Timingfehler bei unveränderter Bitlänge der zu übertragenden Daten nicht mehr so große Zeitabstände zwischen dem sukzessiven Aufschalten der Daten an den einzelnen Wandlerorten eingehalten werden müssen, um eine Überschneidung der Datenpakete auf dem Übertragungsweg sicher auszuschließen; denn ohne die erfindungsgemäße Kompensation der Timingfehler mussten bislang alle Zeitlücken zwischen dem Ende des jeweils vorhergehenden Datenpakets und dem Anfang des jeweils folgenden Datenpakets immer mindestens so groß gehalten werden, dass sie eine maximal auftretende Verzögerungszeit an einem beliebigen Elektronikmodul auffangen konnten. Durch die nunmehr abweichend vom Raster individuell eingestellten Aufschaltzeiten an den einzelnen Wandlerorten, die die individuellen Timingfehler der Elektronikmodule berücksichtigen, haben alle aufeinanderfolgenden Datenpakete einen annähernd konstanten Zeitabstand voneinander, der wegen seiner Invarianz sehr klein ausgeführt werden kann. Mit der nun möglichen Verkürzung der Zeitabstände zwischen den Datenpaketen können auch die Zeitabstände der Rasterimpulse verkürzt und so die Rasterfrequenz des innerhalb eines Synchronisierimpulsintervalls liegenden Rasters wesentlich erhöht, z.B. verdoppelt, werden. Damit geht eine höhere Ausnutzung der Datenleitung einher, so dass an die Datenleitung wesentlich mehr Wandlerorte angeschlossen werden können und die Datenpakete schneller zur Signalverarbeitungseinheit übertragen werden.

Zweckmäßige Ausführungsformen des erfindungsgemäßen Verfahrens mit vorteilhaften Weiterbildungen und Ausgestaltungen der Erfindung ergeben sich aus den Ansprüchen 2 bis 5. Zweckmäßige Ausführungsformen der erfindungsgemäßen Vorrichtung mit vorteilhaften Weiterbildungen und Ausgestaltungen der Erfindung finden sich in den Ansprüchen 7 bis 10.

Gemäß einer vorteilhaften Ausführungsform der Erfindung werden die zum Ausgleich der Timing- oder Aufschalt-Zeitfehler erforderlichen individuellen Zeitverzögerungen der aufzuschaltenden Signale an den verschiedenen Wandlerorten aus der Zeitdifferenz des gemessenen größten Aufschalt-Zeitfehlers und dem an dem jeweiligen Wandlerort gemessenen Aufschalt-Zeitfehler des Elektronikmoduls bestimmt.

Um bei voll ausgenutzter Datenleitung eine größere Anzahl von Signalen oder Daten übertragen zu können, werden gemäß einer vorteilhaften Ausführungsform der Erfindung parallele Datenleitungen verwendet, wobei immer eine Anzahl von Wandlerorten in der erfindungsgemäßen Weise an den Datenleitungen angeschlossen sind. Da die Datenleitungen unterschiedliche Signallaufzeiten aufweisen und es für die Online-Signalverarbeitung, z.B. für die Richtungsbildung, zwingend ist, dass vor Ende eines Synchronisierintervalls alle digitalisierten Signale von sämtlichen Wandlerorten gleichzeitig zur Verfügung stehen, werden gemäß einer vorteilhaften Ausführungsform der Erfindung die Signallaufzeiten auf allen Datenleitungen gemessen und alle auf den Datenleitungen übertragenen Signale oder Daten auf die gemessene längste Signallaufzeit verzögert.

Die Messung der Timing-Fehler und Signallaufzeiten sowie die Bestimmung und Einstellung der Zeitverzögerungen erfolgt entweder manuell beim Einschalten der Empfangsanordnung oder automatisch während des Online-Betriebs. Die automatische Messung und der Zeitausgleich sind besonders bei Empfangsanordnungen auf einem U-Boot vorteilhaft, da die Laufzeiten über die Datenleitungen abhängig von der Operationstiefe des U-Bootes variieren.

Gemäß einer vorteilhaften Ausführungsform der Erfindung geschieht dies in der Weise, dass am Ende einer Datenleitung alle auf der gleichen Datenleitung übertragenen Signale mit einer gleichen Zeitverzögerung von der Datenleitung abgenommen werden. Die Verzögerungszeit für die auf der gleichen Datenleitung übertragenen Signale wird entsprechend der Zeitdifferenz aus der auf allen parallelen Datenleitungen gemessenen längsten Signallaufzeit und der individuellen Signallaufzeit auf dieser Datenleitung bemessen.

Die Erfindung ist anhand eines in der Zeichnung dargestellten Ausführungsbeispiels einer Vorrichtung zur Signal- oder Datenübertragung im folgenden näher beschrieben. Es zeigen:
- Fig. 1: ein Blockschaltbild einer Vorrichtung zum zeitseriellen Übertragen von Empfangssignalen elektroakustischer Wandler,
- Fig. 2: eine Zusammenstellung verschiedener Zeitdiagramme zur Erläuterung des erfindungsgemäßen Verfahrens der Signalübertragung,
- Fig. 3: eine gleiche Zeitdiagrammzusammenstellung wie in Fig. 2 ohne Anwendung des erfindungsgemäßen Verfahrens.

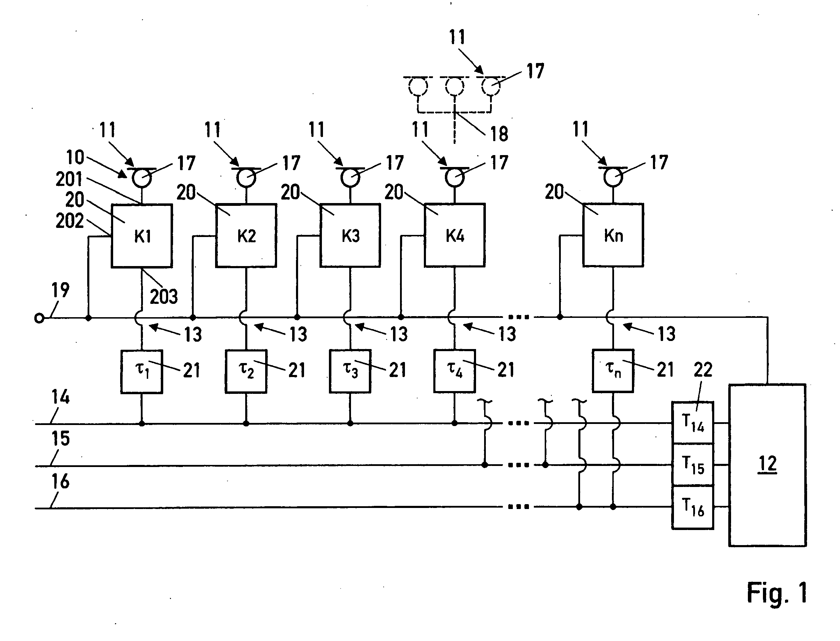

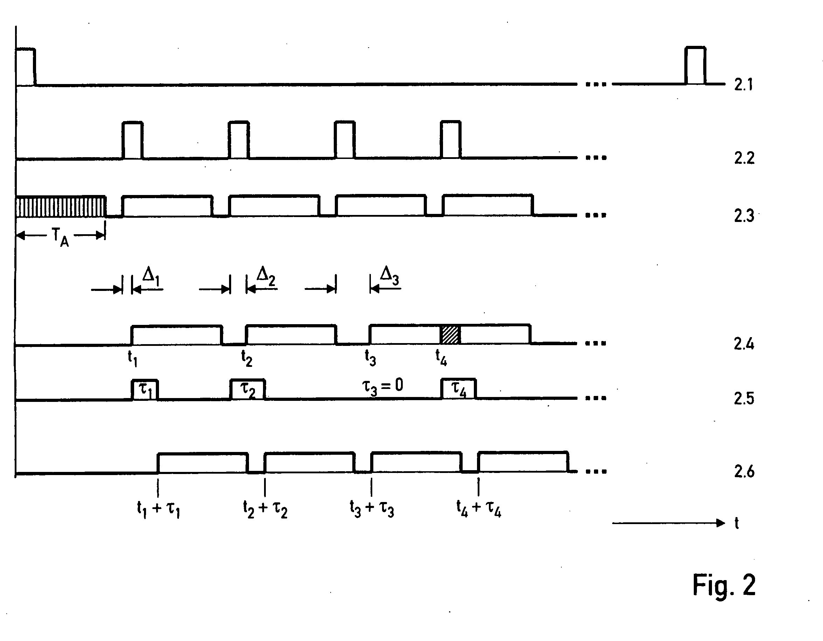

Die in Fig. 1 im Blockschaltbild dargestellte Vorrichtung ermöglicht ein zeitserielles Übertragen von Empfangssignalen elektroakustischer Wandler 11 einer räumlich ausgedehnten Empfanganordnung 10 zu einer zentralen Signalverarbeitungseinheit 12. Die Wandler 11 sind an unterschiedlichen Wandlerorten 13 platziert, und die Übertragung ihrer Empfangssignale erfolgt über mehrere, im Ausführungsbeispiel der Fig. 1 drei, parallele Datenleitungen 14, 15, 16, auch Busse genannt. Die Wandlerorte 13 können in einer sog. Schleppantenne oder in regelmäßiger oder chaotischer Anordnung auf der Oberfläche eines Trägers, z.B. eines U-Boots liegen. Jeder elektroakustische Wandler kann ein einziges Hydrofon 17 oder eine Gruppe 18 von zusammengeschalteten Hydrofonen 17 sein, wie eine solche in Fig. 1 strichliniert angedeutet ist. Zu allen Wandlerorten 13 ist eine Synchronisierleitung 19 geführt, an deren Eingang ein hier nicht dargestellter Master-Clock-Generator angeschlossen ist, der Synchronisierimpulse mit Synchronisierfrequenz auf die Synchronisierleitung 19 gibt. Zwei dieser Synchronisierimpulse sind in Fig. 2.1 beispielhaft dargestellt.

Jedem Wandlerort 13 ist ein Elektronikmodul 20 zugeordnet, das einen mit dem Wandler 11 verbundenen Signaleingang 201, einen an die Synchronisierleitung 13 angeschlossenen Eingang 202 und einen Signalausgang 203 aufweist. In jedem Elektronikmodul 20 werden die an seinem Signaleingang 201 anliegenden Empfangssignale digitalisiert und zu einem Zeitpunkt auf eine der drei Datenleitung 14, 15 oder 16 aufgeschaltet. Der Zeitpunkt ist durch ein Raster bestimmt, das aus den auf der Synchronisierleitung 19 anstehenden Synchronisierimpulsen abgeleitet ist. Aufbau und Funktionsweise eines solchen Elektronikmoduls 20 ist in der EP 0 689 188 B1 angegeben, auf die insoweit Bezug genommen wird. Der Synchronisiertakt, also die Taktfrequenz des Master-Clock-Generators am Anfang der Synchronisierleitung 19, ist durch das Abtasttheorem für die Empfangssignale im höchsten Empfangsfrequenzbereich, die Vielzahl der Wandlerorte 13 und eine vorgegebene Bitlänge für die Digitalisierung des Empfangssignals am Signaleingang 201 bestimmt. Die Frequenz des Master-Clock-Generators wird in einem im Elektronikmodul 20 vorhandenen Taktgenerator vervielfacht und liefert die Taktimpulse für die Digitalisierung der am Signaleingang 201 anstehenden Empfangssignale. Zusätzlich wird von dem Taktgenerator mit Hilfe eines Zählers das durch den Synchronisiertakt vorgegebene Raster aus Rasterimpulsen für die Übertragung der digitalisierten Empfangssignale vom Elektronikmodul 20 auf eine der Datenleitungen 14 bis 16 generiert, indem die Taktimpulse des Taktgenerators vom Zähler gezählt werden und bei Erreichen einer für den Elektronikmodul 20 individuell vorgegebenen Zahl, ein Rasterimpuls ausgegeben wird. In Fig. 2.2 sind beispielhaft vier Rasterimpulse des Rasters, die in vier Elektronikmodulen 20 an vier verschiedenen, der gleichen Datenleitung 14 zugeordneten Wandlerorten 13 erzeugt werden, dargestellt. Der jeweilige Rasterimpuls öffnet ein Tor, und das in einem Schieberegister abgelegte, digitalisierte Empfangssignal wird als digitales Datenpaket über das geöffnete Tor auf die jeweilige Datenleitung 14 bis 16 übertragen. Zwischen zwei Synchronisierimpulsen erfolgt die Abtastung der Empfangssignale an allen Wandlerorten 13 und deren Übertragung zur Signalverarbeitungseinheit 12. Mit jedem Synchronisierimpuls beginnt ein neuer Abtast- und Übertragungszyklus, wobei zunächst im Zeitintervall T_{A} (Fig. 2.3) die Empfangssignale an allen Wandlerorten 13 digitalisiert und in einem Schieberegister gespeichert werden. Mit Auftreten des jeweiligen Rasterimpulses an dem jeweiligen Wandlerort 13 wird das Schieberegister ausgelesen und das digitalisierte Signal als Datenpaket auf die Datenleitungen 14 bzw. 15 bzw. 16 aufgeschaltet.

Beispielhaft sind in Fig. 1 die mit K1 bis K4 bezeichneten Elektronikmodule 20 der Datenleitung 14 und das mit Kn bezeichnete Elektronikmodul 20 der Datenleitung 16 zugewiesen, der selbstverständlich noch weitere Elektronikmodule K(n-1), K(n-2) usw. zugeordnet sind. Der Datenleitung 15 sind Elektronikmodule 20 von anderen Wandlerorten 13 zugewiesen, wie hier nicht weiter dargestellt ist. Somit öffnet von den in Fig. 2.2 dargestellten Rasterimpulsen der erste das Tor im Elektronikmodul K1, der zweite das Tor im Elektronikmodul K2, der dritte das Tor im Elektronikmodul K3 und der vierte das Tor im Elektronikmodul K4. Mit jeder Toröffnung würde somit theoretisch ein einem im Schieberegister abgelegten, digitalen Empfangssignal entsprechendes Datenpaket auf die Datenleitung 14 aufgeschaltet.

Alle Bauelemente und Baugruppen in den Elektronikmodulen 20 sind naturgemäß toleranzbehaftet, was zu einem sog. Timingfehler der Elektronikmodule 20 führt. Ein solcher Timingfehler äußert sich in der Weise, dass das jeweilige Datenpaket des digitalisierten Empfangssignals zu einem Zeitpunkt auf die Datenleitung 14 bzw. 15 bzw. 16 aufgeschaltet wird, der mehr oder weniger von den durch die Rasterimpulse des Rasters theoretisch vorgegebenen Zeitpunkten abweicht. Dies ist in den Zeitdiagrammen der Fig. 2 illustriert. In Fig. 2.2 ist dabei das theoretische Auftreten der Rasterimpulse und in Fig. 2.3 die mit Auftreten der Rasterimpulse an den verschiedenen Wandlerorten 13 auf die Datenleitungen 14, 15, 16 theoretisch übertragenen Datenpakete dargestellt. Bei nicht toleranzbehafteten Bauteilen würde jedes Datenpaket mit der Flanke des Rasterimpulses auf die Datenleitung aufgeschaltet werden.

Tatsächlich werden aber wegen unterschiedlicher Durchlaufzeiten der Bauelemente und allgemeiner Toleranzen die Datenpakete zu Zeitpunkten aufgeschaltet, die gegenüber den theoretischen Zeitpunkten um eine Zeitdifferenz Δ zeitverschoben sind. Beispielhaft wird im Zeitdiagramm der Fig. 2.4 das Datenpaket vom Elektronikmodul K1 zum Zeitpunkt t₁ mit einer Zeitverschiebung Δ₁, vom Elektronikmodul K2 zum Zeitpunkt t₂ mit einer Zeitverschiebung Δ₂, vom Elektronikmodul K3 zum Zeitpunkt t₃ mit einer

Zeitverschiebung Δ₃ und vom Elektronikmodul K4 zum Zeitpunkt t₄ ohne Zeitverschiebung gegenüber dem jeweiligen Rasterimpuls auf die Datenleitungen 14, 15, 16 aufgeschaltet. Ist die Rasterfrequenz zu hoch gewählt, d. h. der Zeitabstand zwischen den Rasterimpulsen zu klein, so kann es durch diese Zeitverschiebungen zu Überschneidungen der Datenpakete und damit zur Störung der Signalübertragung kommen. Dies ist beispielhaft für die Datenpakete der Elektronikmodule K3 und K4, die zu den Zeitpunkten t₃ und t₄ auf die Datenleitung 14 aufgeschaltet werden, in Fig. 2.4 dargestellt. Hier überlappen sich die Datenpakete im schraffiert dargestellten Bereich.

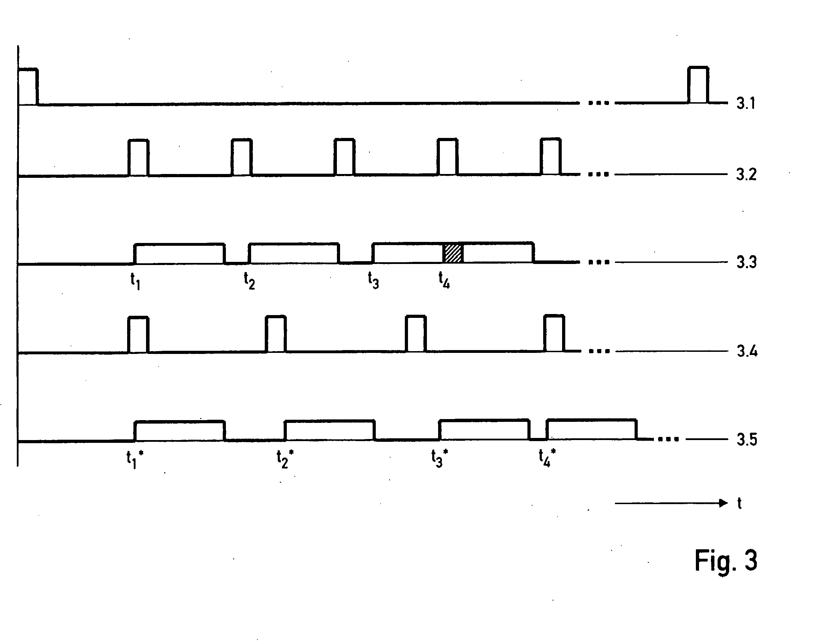

Im Stand der Technik werden solche Überlappungen dadurch vermieden, dass die Rasterfrequenz relativ niedrig gewählt wird, so dass die Aufschaltzeitpunkte soweit auseinanderliegen, dass die an verschiedenen Wandlerorten 13 auf die Datenleitung 14 aufgeschalteten Datenpakte zeitlich nicht miteinander in Berührung kommen. Dies in Fig. 3 illustriert, wobei in Fig. 3.1 nochmals das Intervall mit zwei der auf der Synchronisierleitung 19 aufeinanderfolgenden Synchronisierimpulse wie in Fig. 2.1 und in Fig. 3.2 nochmals das Raster der in den einzelnen Wandlerorten 13 auftretenden Rasterimpulse identisch mit Fig. 2.2 dargestellt sind. Um bei den beispielhaft in Fig. 3.3 angenommenen Aufschalt-Zeitfehlern von vier Elektronikmodulen 20 an vier Wandlerorten 13, wie sie von Fig. 2.4 übernommen worden sind, die Überschneidung der vom Elektronikmodul K3 und vom Elektronikmodul K4 auf die Datenleitung 19 aufgeschalteten Datenpakete zu vermeiden, wird die Rasterfrequenz gegenüber der Rasterfrequenz in Fig. 3.2 verringert, wie dies in Fig. 3.4 dargestellt ist. Dies führt dazu, dass - wie dies in Fig. 3.5 dargestellt ist - die vom Elektronikmodul K3 und vom Elektronikmodul K4 aufgeschalteten Datenpakte einen zeitlichen Abstand voneinander haben und keinen Überlappungsbereich mehr zeigen. Als Nachteil muss allerdings die niedrige Rasterfrequenz in Kauf genommen werden. Beträgt beispielhaft die Rasterfrequenz in Fig. 3.2 500Hz, so ist die zur Vermeidung der Überlappung erforderliche Rasterfrequenz in Fig. 3.5 nur noch 350Hz. Mit der niedrigen Rasterfrequenz muss eine niedrigere Datenübertragungsrate im Kauf genommen werden, so dass in einem gleichen Zeitintervall gemäß Fig. 3.1 Datenpakete von einer geringeren Anzahl von Wandlerorten 13 übertragen werden können.

Um solche Überlappungen der an verschiedenen Wandlerorten 13 auf die gleiche Datenleitung 14 bzw. 15 bzw. 16 aufgeschalteten Datenpakete zu vermeiden und dennoch eine dichte Packung der Datenpakte auf der Datenleitung 14 bzw. 15 bzw. 16 zur Erzielung einer hohen Datenrate beizubehalten, werden gemäß dem hier vorgestellten Verfahren die Timing-oder Aufschalt-Zeitfehler aller Elektronikmodule 22 an den Wandlerorten 13, die eine gemeinsame Datenleitung zur Übertragung der Empfangssignale nutzen, gemessen und an den Wandlerorten 13 durch individuelle Zeitverzögerung der aufzuschaltenden Signale oder Datenpakete ausgeglichen. Hierzu sind Zeitverzögerungsglieder 21 mit individuell eingestellten Verzögerungszeiten τ vorgesehen, die zwischen dem Signalausgang 203 der Elektronikmodule 20 und der Datenleitung 14, 15, 16 angeordnet sind (Fig. 1). Die eingestellten, individuellen Verzögerungszeiten τ entsprechen jeweils der Zeitdifferenz des größten Aufschalt-Zeitfehlers, der an einem der eine gemeinsame Datenleitung 14 bzw. 15 bzw. 16 benutzenden Wandlerorte 13 gemessen worden ist, und dem an dem individuellen Wandlerort 13 gemessenen Aufschalt-Zeitfehler.

Im Ausführungsbeispiel der Fig. 1 sind die Wandlerorte 13 mit den Elektronikmodulen K1 bis K4 der Übertragungsleitung 14 zugewiesen. Wie beispielhaft in Fig. 2.4 gezeigt ist, hat der Elektronikmodul K3 den größten Aufschalt-Zeitfehler Δ₃. Der Elektronikmodul K2 hat demgegenüber einen kleineren Aufschalt-Zeitfehler Δ₂ und der Elektronikmodul K1 den noch kleineren Aufschalt-Zeitfehler Δ₁. Der Elektronikmodul K4 soll keinen Aufschalt-Zeitfehler haben. Nach dem Vorhergesagten bestimmt sich somit für den Elektronikmodul K1 die Verzögerungszeit τ₁=Δ₃-Δ₁ für den Wandlerort 13 mit dem Elektronikmodul K2 die Verzögerungszeit τ₂=Δ₃-Δ₂, für den Wandlerort 13 mit dem Elektronikmodul K3 die Verzögerungszeit τ₃=0 und für den Wandlerort 13 mit dem Elektronikmodul K4 die Verzögerungszeit τ₄=Δ₃. Der Wandlerort 13 mit dem Elektronikmodul Kn ist nicht zu berücksichtigen, da er auf der Datenleitung 16 aufgeschaltet ist und in Verbindung mit den anderen, der Datenleitung 16 zugewiesenen Wandlerorten 13 behandelt werden muss. Die Verzögerungszeiten τ sind in Fig. 2.5 dargestellt. Wie Fig. 2.6 zeigt, wird somit das Datenpaket am Wandlerort 13 mit dem Elektronikmodul K1 zum Zeitpunkt t₁+t₁, am Wandlerort 13 mit dem Elektronikmodul K2 zum Zeitpunkt t₂+τ₂, am Wandlerort 13 mit dem Elektronikmodul K3 zum Zeitpunkt t₃+τ₃ und am Wandlerort 13 mit dem Elektronikmodul K4 zum Zeitpunkt t₄+τ₄ auf die Datenleitung 14 übertragen. Wie aus Fig. 2.6 ersichtlich ist, sind die Datenpakete eng gepackt und überlappen sich nicht. Damit wird auf der Datenleitung 14 eine störsichere Übertragung mit hoher Datenrate erzielt.

Die drei parallel betriebenen Datenleitungen 14, 15, 16 weisen üblicherweise unterschiedliche Signallaufzeiten auf. Für die Online-Signalverarbeitung ist es aber wesentlich, dass die Empfangssignale von allen Wandlerorten 13 zeitgleich zur Verfügung stehen. Um dieses sicherzustellen werden die Signallaufzeiten auf allen Datenleitungen 14, 15, 16 gemessen und alle auf den Datenleitungen 14, 15 ,16 übertragenen Signale auf die gemessene längste Signallaufzeit zeitlich verzögert. Dies erfolgt in der Weise, dass alle auf der gleichen Datenleitung 14 bzw. 15 bzw. 16 übertragenen Signale am Ende der Datenleitung um eine gleiche Zeitverzögerung ausgegeben werden. Die Verzögerungszeit für die Signale auf jeder Datenleitung 14 bzw. 15 bzw. 16 entspricht der Zeitdifferenz zwischen der beim Messen der Signallaufzeiten aller Datenleitungen 14, 15, 16 gemessenen längsten Signallaufzeit und der individuellen Signallaufzeit auf der jeweiligen Datenleitung 14 bzw. 15 bzw. 16. In Fig. 1 sind die Zeitverzögerungsglieder in einem Kompensationsglied 22 zusammengefasst und ihre Verzögerungszeiten mit T₁₄, T₁₅ und T₁₆ angegeben. Wird z. B. an der Datenleitung 16 die längste Signallaufzeit SL₁₆ gemessen, so ergibt sich T₁₄ = SL₁₆ - SL₁₄ und T₁₅ = SL₁₆ - SL₁₅, wobei SL₁₄ die Signallaufzeit der Datenleitung 14 und SL₁₅ die Signallaufzeit der Datenleitung 15 ist.

Anstelle der einzelnen Zeitverzögerungsglieder 22 kann auch ein Pufferspeicher vorgesehen werden, in den alle Daten eingelesen werden und der nach einer Zeitspanne, der der Differenz zwischen der langsamsten und schnellsten Signallaufzeit auf den Datenleitungen 14, 15, 16 entspricht, parallel ausgelesen wird.

Die räumlich ausgedehnte Empfangsanordnung 10 kann durch verschiedene, bekannte Antennenkonfigurationen realisiert sein, so als Akustikteil einer Schlauchantenne, z.B. einer Vertikalantenne oder Schleppantenne, einem sog. Towed Array System (TAS), die eine Vielzahl von Wandlern an hintereinander aufgereihten Wandlerorten aufweist, als eine am Bootskörper eines U-Boots befestigte Seitenantenne, ein sog. Flank Array System (FAS), als drei Wandlergruppen für eine passive Entfernungsmessung (PRS), wobei jeweils eine Wandlergruppe an drei weit auseinanderliegenden Wandlerorten angeordnet ist, als eine über das U-Boot verteilte Hydrofonanordnung, eines sog. Intercept-Detection-Ranging-Sonar (IDRS), als Messanordnung zur Eigengeräuschanalyse an Bord eines U-Boots (ONA, ACC), bei der an unterschiedlichen Wandlerorten, z.B. in der Nähe von Antrieb und Turm, Körperschallwandler angeordnet sind.

## Patentansprüche

1. Verfahren zum zeitseriellen Übertragen von Empfangssignalen elektroakustischer Wandler (11), die an unterschiedlichen Wandlerorten (13) einer räumlich ausgedehnten Empfangsanordnung (10) platziert sind, zu einer Signalverarbeitungseinheit (12), bei dem an jedem Wandlerort (13) mittels eines Elektronikmoduls (20) die Empfangssignale digitalisiert und die digitalisierten Empfangssignale im Raster eines Synchronisiertaktes auf eine zur Signalverarbeitungseinheit (12) führende Datenleitung (14, 15, 16) aufgeschaltet werden, **dadurch gekennzeichnet, dass** den Elektronikmodulen (20) immanente Aufschalt-Zeitfehler bezüglich den durch das Raster vorgegebenen Aufschaltzeitpunkten gemessen und an den Wandlerorten (13) durch individuelle Zeitverzögerung der aufzuschaltenden Signale ausgeglichen werden.

2. Verfahren nach Anspruch 1, **dadurch gekennzeichnet, dass** die an einem Wandlerort (13) vorgenommene, individuelle Zeitverzögerung entsprechend der Zeitdifferenz zwischen dem gemessenen größten Aufschalt-Zeitfehler und dem an diesem Wandlerort (13) gemessenen individuellen Aufschalt-Zeitfehler bestimmt wird.

3. Verfahren nach Anspruch 1 oder 2, **dadurch gekennzeichnet, dass** zur Übertragung der Signale mehrere parallele Datenleitungen (14, 15, 16) verwendet werden, dass die Signallaufzeiten auf allen Datenleitungen (14, 15, 16) gemessen werden und dass alle auf den Datenleitungen (14, 15, 16) aufgeschalteten Signale auf die gemessene längste Signallaufzeit zeitverzögert werden.

4. Verfahren nach Anspruch 3, **dadurch gekennzeichnet, dass** alle über die gleiche Datenleitung (14 bzw. 15 bzw. 16) übertragenen Signale am Ende der Datenleitung (14 bzw. 15 bzw. 16) mit einer gleichen Zeitverzögerung ausgegeben werden.

5. Verfahren nach Anspruch 4, **dadurch gekennzeichnet, dass** die Verzögerungszeit für die Signale auf der gleichen Datenleitung (14 bzw. 15 bzw. 16) entsprechend der Zeitdifferenz zwischen der an den parallelen Datenleitungen (14 bzw. 15 bzw. 16) gemessenen längsten Signallaufzeit und der an der Datenleitung (14 bzw. 15 bzw. 16) gemessenen individuellen Signallaufzeit bemessen wird.

6. Verfahren nach einem oder mehreren der Ansprüche 1 bis 5, **dadurch gekennzeichnet, dass** der Aufschaltzeitfehler und die Signallaufzeiten manuell mit dem Einschalten oder automatisch online gemessen und ausgeglichen werden.

7. Vorrichtung zum zeitseriellen Übertragen von Empfangssignalen elektroakustischer Wandler (11), die an unterschiedlichen Wandlerorten (13) einer räumlich ausgedehnten Empfangsanordnung (10) platziert sind, zu einer Signalverarbeitungseinheit (12), mit den Wandlerorten (13) zugeordneten, an jeweils einem Wandler angeschlossenen Elektronikmodulen (20) zum Digitalisieren der Empfangssignale und zum Aufschalten der digitalisierten Empfangssignale auf eine zur Signalverarbeitungseinheit (12) führende Datenleitung (14, 15, 16) zu durch das Raster eines Synchronisiertaktes vorgegebenen Zeitpunkten, **dadurch gekennzeichnet, dass** jedem Elektronikmodul (20) ein Zeitverzögerungsglied (21) mit einer auf den Aufschalt-Zeitfehler des Elektronikmoduls (20) abgestimmten, individuellen Zeitverzögerungszeit zugeordnet ist.

8. Vorrichtung nach Anspruch 7, **dadurch gekennzeichnet, dass** das Zeitverzögerungsglied (21) zwischen Signalausgang (203) des Elektronikmoduls (20) und der Datenleitung (14, 15, 16) angeordnet ist.

9. Vorrichtung nach Anspruch 7 oder 8, **dadurch gekennzeichnet, dass** die im Zeitverzögerungsglied (21) eingestellte individuelle Verzögerungszeit der Zeitdifferenz zwischen einem an den Elektronikmodulen (20) einer Datenleitung (14 bzw. 15 bzw. 16) gemessenen größten Aufschalt-Zeitfehler und dem individuellen Aufschalt-Zeitfehler des Elektronikmoduls (20) entspricht.

10. Vorrichtung nach einem der Ansprüche 7 bis 9, **dadurch gekennzeichnet, dass** die Wandlerorte (13) zur Übertragung der Empfangssignale auf mehrere, parallele Datenleitungen (14, 15, 16) mit bekannten Signallaufzeiten verteilt sind und dass am Ende der Datenleitungen (14, 15, 16) ein Kompensationsglied (22) angeordnet ist, das die Signallaufzeiten aller Datenleitungen (14, 15, 16) an die längste Signallaufzeit der langsamsten Datenleitung anpasst.

11. Vorrichtung nach Anspruch 10, **dadurch gekennzeichnet, dass** das Kompensationsglied (22) Zeitverzögerungsglieder mit individuell eingestellten Verzögerungszeiten aufweist, von denen jeweils eines zwischen einer der Datenleitungen (14 bzw. 15 bzw. 16) und der Signalverarbeitungseinheit (12) angeschlossen ist und eine individuell eingestellte Verzögerungszeit (T₁₄ bzw. T₁₅ bzw. T₁₆) aufweist, die der Zeitdifferenz zwischen der auf den parallelen Datenleitungen (14 bzw. 15 bzw. 16) auftretenden längsten Signallaufzeit und der individuellen Signallaufzeit der Datenleitung (14 bzw. 15 bzw. 16) entspricht, an der das Zeitverzögerungsglied angeschlossen ist.

## Claims

1. A method for the time-serial transmission of receive signals of electroacoustic transducers (11), which are placed at different transducer locations (13) of a spatially spread receive arrangement (10), to a signal processing unit (12), in which at each transducer location (13) the receive signals are digitized by an electronic module (20), and the digitized receive signals are switched onto a data line (14, 15, 16) leading to the signal processing unit (12) in the timing pattern of a synchronization clock, **characterized in that** the intrinsic switching-time errors of the electronic modules (20) are measured with respect to the switching times defined by the timing pattern, and compensated for at the transducer locations (13) by individual time delay of the signals to be switched.

2. The method as claimed in claim 1, **characterized in that** the individual time delay made at a transducer location (13) is set to equal the time difference between the measured largest switching-time error and the individual switching-time error measured at this transducer location (13).

3. The method as claimed in claim 1 or 2, **characterized in that** parallel data lines (14, 15, 16) are used to transmit the signals, **in that** the signal propagation delays on all the data lines (14, 15, 16) are measured, and **in that** all the signals switched onto the data lines (14, 15, 16) are delayed to the measured longest signal propagation delay.

4. The method as claimed in claim 3, **characterized in that** at the end of a data line (14, 15, or 16 respectively), all the signals transmitted over the same data line (14, 15, or 16 respectively) are output with an identical time delay.

5. The method as claimed in claim 4, **characterized in that** the delay for the signals on the same data line (14, 15, or 16 respectively) is set to equal the time difference between the longest signal propagation delay measured on the parallel data lines (14, 15, or 16 respectively) and the individual signal propagation delay measured on the data line (14, 15, or 16 respectively).

6. The method as claimed in one or more of claims 1 to 5, **characterized in that** the switching-time error and the signal propagation delays are measured and compensated for manually when switching on or automatically online.

7. A device for the time-serial transmission of receive signals of electroacoustic transducers (11), which are placed at different transducer locations (13) of a spatially spread receive arrangement (10), to a signal processing unit (12), having electronic modules (20) assigned to the transducer locations (13) and each connected to one transducer for digitizing the receive signals and for switching the digitized receive signals onto a data line (14, 15, 16) leading to the signal processing unit (12) at points in time defined by the timing pattern of a synchronization clock, **characterized in that** each electronic module (20) is assigned a delay element (21) having an individual time delay set according to the switching-time error of the electronic module (20).

8. The device as claimed in claim 7, **characterized in that** the delay element (21) is arranged between signal output (203) of the electronic module (20) and the data line (14, 15, 16).

9. The device as claimed in claim 7 or 8, **characterized in that** the individual time delay set in the delay element (21) equals the time difference between a largest switching-time error measured at the electronic modules (20) of a data line (14, 15, or 16 respectively) and the individual switching-time error measured of the electronic module (20).

10. The device as claimed in any of claims 7 to 9, **characterized in that**, to transmit the receive signals, the transducer locations (13) are distributed over a plurality of parallel data lines (14, 15, 16) having know signal propagation delays, and that a compensation element (22) is arranged at the end of the data lines (14, 15, 16), which adjusts the signal propagation delays of all the data lines (14, 15, 16) to the longest signal propagation delay of the slowest data line.

11. The device as claimed in claim 10, **characterized in that** the compensation element (22) comprises delay elements having individually set delays, each of these delay elements being connected between one of the data lines (14, 15, or 16 respectively) and the signal processing unit (12) and having an individually set delay (T₁₄, T₁₅ or T₁₆ respectively), which equals the time difference between the longest signal propagation delay occurring on the parallel data lines (14, 15 or 16 respectively) and the individual signal propagation delay of the data line (14, 15 or 16 respectively) to which the delay element is connected.

## Revendications

1. Procédé de transmission en série dans le temps de signaux reçus de transducteurs électroacoustiques (11) qui sont placés en différents emplacements de transducteur (13) d'un arrangement de réception (10) étalé dans l'espace vers une unité de traitement de signal (12), selon lequel, à chaque emplacement de transducteur (13), les signaux reçus sont numérisés au moyen d'un module électronique (20) et les signaux reçus numérisés sont connectés dans la trame d'une horloge de synchronisation sur une ligne de données (14, 15, 16) qui mène à l'unité de traitement de signal (12), **caractérisé en ce que** les erreurs de temps de connexion immanentes aux modules électroniques (20) concernant les instants de connexion prédéfinis par la trame sont mesurées et sont compensées au niveau des emplacements de transducteur (13) par un retard individuel des signaux à connecter.

2. Procédé selon la revendication 1, **caractérisé en ce que** le retard individuel appliqué à un emplacement de transducteur (13) est déterminé conformément à la différence de temps entre la plus grande erreur de temps de connexion mesurée et l'erreur de temps de connexion individuelle mesurée à cet emplacement de transducteur (13).

3. Procédé selon la revendication 1 ou 2, **caractérisé en ce que** plusieurs lignes de données (14, 15, 16) parallèles sont utilisées pour la transmission des signaux, **en ce que** les temps de propagation du signal sont mesurés sur toutes les lignes de données (14, 15, 16) et **en ce que** tous les signaux connectés sur les lignes de données (14, 15, 16) sont retardés au temps de propagation du signal le plus long mesuré.

4. Procédé selon la revendication 3, **caractérisé en ce que** tous les signaux transmis par le biais de la même ligne de données (14 ou 15 ou 16) sont délivrés à la fin de la ligne de données (14 ou 15 ou 16) avec un même retard.

5. Procédé selon la revendication 4, **caractérisé en ce que** le temps de retard pour les signaux sur la même ligne de données (14 ou 15 ou 16) est dimensionné conformément à la différence de temps entre le temps de propagation du signal le plus long mesuré sur les lignes de données (14 ou 15 ou 16) parallèles et le temps de propagation du signal individuel mesuré sur la ligne de données (14 ou 15 ou 16).

6. Procédé selon une ou plusieurs des revendications 1 à 5, **caractérisé en ce que** l'erreur de temps de connexion et les temps de propagation du signal sont mesurés manuellement à la mise sous tension ou automatiquement en ligne et sont compensés.

7. Dispositif de transmission en série dans le temps de signaux reçus de transducteurs électroacoustiques (11) qui sont placés en différents emplacements de transducteur (13) d'un arrangement de réception (10) étalé dans l'espace vers une unité de traitement de signal (12), comprenant des modules électroniques (20) associés aux emplacements de transducteur (13) et respectivement raccordés à un transducteur pour numériser les signaux reçus et pour connecter les signaux reçus numérisés sur une ligne de données (14, 15, 16) qui mène à l'unité de traitement de signal (12) à des instants prédéfinis par la trame d'une horloge de synchronisation, **caractérisé en ce qu'**à chaque module électronique (20) est associé un élément à retard (21) avec un temps de retard individuel accordé sur l'erreur de temps de connexion du module électronique (20).

8. Dispositif selon la revendication 7, **caractérisé en ce que** l'élément à retard (21) est disposé entre la sortie du signal (203) du module électronique (20) et la ligne de données (14, 15, 16).

9. Dispositif selon la revendication 7 ou 8, **caractérisé en ce que** le temps de retard individuel réglé dans l'élément à retard (21) correspond à la différence de temps entre une erreur de temps de connexion la plus élevée mesurée sur les modules électroniques (20) d'une ligne de données (14 ou 15 ou 16) et l'erreur de temps de connexion individuelle du module électronique (20).

10. Dispositif selon l'une des revendications 7 à 9, **caractérisé en ce que** les emplacements de transducteur (13), pour la transmission des signaux reçus, sont répartis sur plusieurs lignes de données (14, 15, 16) parallèles ayant des temps de propagation du signal connus et **en ce qu'**à la fin des lignes de données (14, 15, 16) est disposé un élément de compensation (22) qui adapte les temps de propagation du signal de toutes les lignes de données (14, 15, 16) au temps de propagation du signal le plus long de la ligne de données la plus lente.

11. Dispositif selon la revendication 10, **caractérisé en ce que** l'élément de compensation (22) présente des éléments de retard avec des temps de retard réglés individuellement, dont un est à chaque fois branché entre les lignes de données (14 ou 15 ou 16) et l'unité de traitement de signal (12) et présente un temps de retard (T₁₄ ou T₁₅ ou T₁₆) réglé individuellement qui correspond à la différence de temps entre le temps de propagation du signal le plus long qui se produit sur les lignes de données (14 ou 15 ou 16) parallèles et le temps de propagation du signal individuel de la ligne de données (14 ou 15 ou 16) à laquelle est raccordé l'élément de retard.
